# FASCICULE DE BREVET EUROPEEN

(11) **EP 2 438 717 B1**
(45) Date de publication et mention de la délivrance du brevet: **18.07.2018**
(21) Numéro de dépôt: 10723720.8
(22) Date de dépôt: 22.04.2010
(51) Int. Cl.: H04L 12/755, H04L 12/751

(54) **PROCÉDÉ DE PROTECTION D'UN RÉSEAU DE TÉLÉCOMMUNICATION ET ROUTEUR SÉCURISÉ METTANT EN OEUVRE UN TEL PROCÉDÉ**
VERFAHREN ZUR SICHERUNG EINEM TELEKOMMUNIKATIONSNETZ UND GESICHERTER ROUTER ZUR UMSETZUNG DIESES VERFAHRENS
METHOD FOR PROTECTION OF A TELECOMMUNICATIONS NETWORK AND TRUSTED ROUTER USING SAID METHOD

(30) Priorité: 02.06.2009 FR 0953639
(43) Date de publication de la demande: 11.04.2012
(73) Titulaire: Alcatel Lucent, 91620 Nozay (FR)
(72) Inventeur: EL ABED, Haithem, F-91620 Nozay (FR); MARTIN, Antony, F-91620 Nozay (FR)
(74) Mandataire: Berthier, Karine
(86) Numéro de dépôt international: PCT/FR2010/050770
(87) Numéro de publication internationale: WO 2010/139871

(56) Documents cités:
- EP-A- 1 056 010
- US-A1- 2006 010 249
- US-A1- 2007 127 457
- US-B1- 6 973 023
- JOU Y F ET AL: "Design and implementation of a scalable intrusion detection system for the protection of network infrastructure" DARPA INFORMATION SURVIVABILITY CONFERENCE AND EXPOSITION, 2000. DISCE X '00. PROCEEDINGS HILTON HEAD, SC, USA 25-27 JAN. 2000, LAS ALAMITOS, CA, USA,IEEE COMPUT. SOC, US, vol. 2, 25 janvier 2000 (2000-01-25), pages 69-83, XP010371109 ISBN: 978-0-7695-0490-2

## Description

La présente invention concerne un procédé de protection d'un réseau de télécommunication ainsi qu'un routeur mettant en oeuvre un tel procédé.

Un réseau de télécommunication tel que le réseau Internet comprend une pluralité de routeurs intermédiaires reliés entre eux de telle sorte que des informations transmises d'un premier serveur vers un second serveur sont généralement routées par un ou plusieurs de ces routeurs intermédiaires.

Afin d'optimiser ces transmissions intermédiaires, il est connu de munir chaque routeur d'une carte identifiant la topologie de son réseau ou, plus généralement, d'une partie de ce réseau - dénommée aire ou zone par la suite - dans laquelle il est situé.

Une telle carte topologique présente un état des relations entre les routeurs de son réseau ou de sa zone de telle sorte que, en considérant un premier routeur et un second routeur localisés sur cette carte, le premier routeur peut déterminer à l'aide de cette carte topologique un parcours optimal, c'est-à-dire une liste de routeurs intermédiaires, pour transmettre des informations à ce second routeur à travers ce réseau ou cette zone.

De façon concrète et dans le cadre du réseau Internet, il est connu d'utiliser un protocole de routage dénommé OSPF, pour « Open Shortest Path First », selon lequel chaque routeur i d'une aire détermine notamment une liste de liens LSAi, pour « Link-State Advertisements » en anglais, identifiant des routeurs de cette aire auxquels il est directement relié, dénommés routeurs voisins par la suite.

Par la suite, chaque routeur i partage avec ses routeurs voisins, dans un message dénommé LSU pour « Link-State Update » en anglais, sa liste de liens LSAi et des listes de liens reçues LSA1, LSA2, ...LSAn d'autres routeurs.

Chaque routeur peut alors stocker dans une base de données dénommée LSDB pour « Link-State Database » ces listes de liens de telle sorte que, à partir de cette base LSBD, un routeur compris dans cette aire OSPF détermine un chemin optimal - typiquement le plus court selon l'approche « Shortest path First » - pour la transmission d'information vers un autre routeur compris dans la même aire OSPF. Le brevet US6973023 divulgue un procédé utilisé dans les routeurs d'un réseau de télécommunication, dans lequel les liste de liens sont échangées. A chaque liste de liens est associée une checksum, lorsque les routeurs échangent des listes de liens, la checksum permet de constater d'éventuelles changement dans la liste de liens. Afin de prévenir un détournement frauduleux d'informations transmises via le réseau Internet, il est envisagé de protéger l'identité des routeurs émettant un message LSU en requérant leur signature de ce message, par exemple au moyen d'un procédé cryptographique du type clef partagée.

La présente invention résulte de la constatation qu'un tel procédé ne permet pas de prévenir des détournements « internes » d'information pouvant être mis en oeuvre par un fraudeur contrôlant une couche de transmission d'un routeur corrompu de telle sorte que le fraudeur puisse remplacer le message LSU reçu au niveau du routeur corrompu par un message LSU comprenant des listes tronquées, par exemple identifiant un routeur frauduleux afin d'y détourner des informations.

Dans ce cas, ce message LSU corrompu est alors correctement signé par la couche de protection du routeur corrompu - alors même que cette couche n'est pas détournée par le fraudeur - et, par conséquent, cette fraude s'étend au réseau.

En effet, dans ce cas de fraude interne, le fraudeur obtient que sa liste tronquée soit considérée comme valable par les autres routeurs de la zone OSPF qui constateront la validité de la signature du routeur corrompu.

La présente invention vise à résoudre ce problème en proposant un procédé permettant d'assurer l'intégrité des cartes topologiques établies dans un réseau de télécommunication, notamment vis-à-vis d'attaques internes permettant à un fraudeur de contrôler un routeur de ce réseau pour modifier une liste de liens.

C'est pourquoi l'invention concerne un procédé de protection d'un réseau de télécommunication suivant la revendication 1. Grâce à l''invention, il est possible de sécuriser un réseau de télécommunication en prévenant une fraude interne visant à contrôler un routeur pour modifier ses listes de liens et propager une liste frauduleuse.

De fait, un routeur sécurisé conformément à l'invention ne partage avec les autres routeurs que les listes de liens dont l'empreinte, à l'émission, correspond à l'empreinte à la réception.

En d'autres termes, un routeur sécurisé conformément à l'invention peut vérifier l'intégrité des listes partagées afin d'inhiber tout partage d'une liste ayant pu être modifiée en interne, notamment au niveau d'une couche de transmission distincte et plus vulnérable qu'une couche de protection/cryptage.

L'invention présente l'avantage de pouvoir être implémentée dans des routeurs existants, conformément à des protocoles de communication existants, sans requérir une modification de tous les routeurs du réseau concerné.

Dans une réalisation, le procédé comprend l'étape de calculer l'empreinte de réception pour chaque liste reçue et l'étape de calculer l'empreinte d'émission pour chaque liste à émettre.

Selon une réalisation, le procédé comprend l'étape d'inhiber uniquement l'émission des listes dont l'empreinte de réception est distincte de l'empreinte d'émission.

Dans une réalisation, les empreintes de réception et de transmission sont obtenues par une fonction de hachage.

Dans une réalisation, le procédé comprend l'étape, pour la couche sécurisée, d'associer aux listes émises une signature identifiant le routeur sécurisé après la comparaison des empreintes d'émission et de réception.

Selon une réalisation, le procédé comprend l'étape, pour la couche sécurisée, de vérifier dans les listes reçues une signature de routeur dans les listes reçues avant le calcul des empreintes d'émission.

Dans une réalisation, la couche sécurisée est mise en oeuvre avec des moyens distants ou amovibles vis-à-vis du routeur.

Dans ce cas, les moyens distants ou amovibles peuvent être formés par une carte à puce et/ou un routeur distinct du routeur sécurisé.

Selon une réalisation, les moyens distants ou amovibles effectuent au moins une des opérations suivantes : Fournir une fonction de hachage, effectuer le stockage des empreintes, comparer les empreintes de réception avec les empreintes de transmission.

Dans une réalisation, le réseau de télécommunication étant une aire du réseau Internet, le procédé utilise le protocole OSPF pour établir la carte de cette aire au moyen de listes LSA.

L'invention concerne également un routeur sécurisé d'un réseau de télécommunication suivant la revendication 11. L'invention concerne également une carte à puce pour routeur sécurisé d'un réseau de télécommunication, suivant la revendication 12. L'invention sera mieux comprise à la lumière de la description effectuée ci-dessous, à titre illustratif et non limitatif, en référence aux figures ci-jointes sur lesquelles :
- les figures 1 à 3 représentent différentes étapes d'un procédé de réception d'informations relatives à une carte topologique d'un réseau de télécommunication selon l'invention, et
- les figures 4 à 6 représentent différentes étapes d'un procédé de transmission d'informations relatives à une carte topologique d'un réseau de télécommunication selon l'invention.

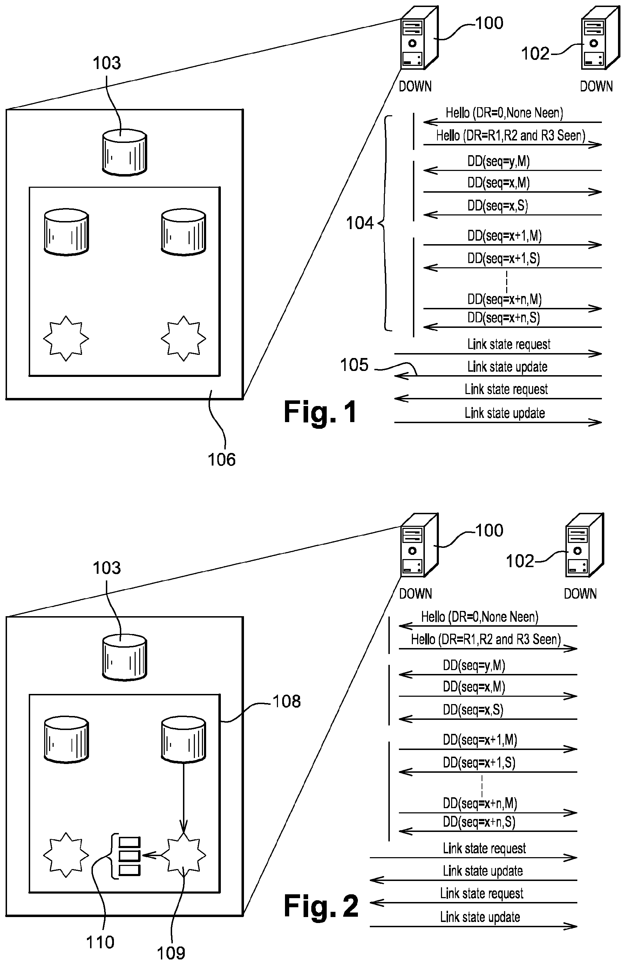

En référence à la figure 1 sont représentés deux routeurs 100 et 102 situés sur une même aire du réseau Internet - non représenté.

Afin de permettre la mise à jour de la base 103 de données LSBD du routeur 100, le routeur 102 met en oeuvre un premier échange 104 de reconnaissance permettant l'envoi 105 d'un paquet OSPF 106, ou LSU pour Link-States Updates » en anglais, préalablement signé au niveau de sa couche de sécurité.

En référence à la figure 2, le routeur 100 utilise sa couche de sécurité 108 pour valider une signature du routeur 102 (étape 109) puis, en cas de validation, pour extraire les différentes listes LSA1, LSA2, ... LSAn transmises par ce paquet 106 (étape 110).

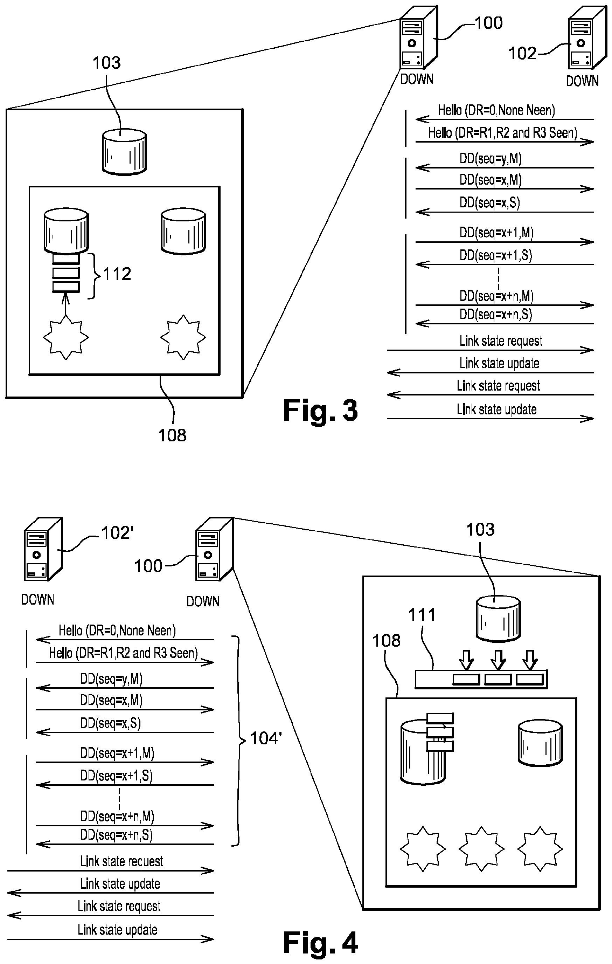

Par la suite au moins une empreinte 112 de ces listes LSA1, LSA2, ... LSAn est obtenue puis stockée dans la couche de protection (figure 3) de telle sorte que toute modification de ces listes au niveau de la couche de transmission soit détectée par la couche de protection.

En fonction des réalisations, il est possible d'obtenir une unique empreinte pour l'ensemble des listes de liens LSA1, LSA2, ... LSAn transmises ou plusieurs empreintes hash(LSA1), hash(LSA2), ... hash(LSAn) pour chacune de ces listes de liens LSA1, LSA2, ... LSAn.

Dans tous les cas, l'invention est mise en oeuvre en comparant des empreintes relatives à au moins une liste, ces empreintes étant calculées de la même façon en prenant en compte cette liste - individuellement ou avec d'autres listes.

Lorsque le routeur 100 souhaite transmettre vers un routeur 102' des listes LSA'1, LSA'2, ... LSA'n dans un paquet LSU 111 après l'établissement 104' d'une communication, sa base 103 - située dans sa couche de transmission - transmet les listes stockées à sa couche de protection (figure 4) afin que cette dernière génère le paquet LSU 111 comprenant notamment la signature du routeur 100.

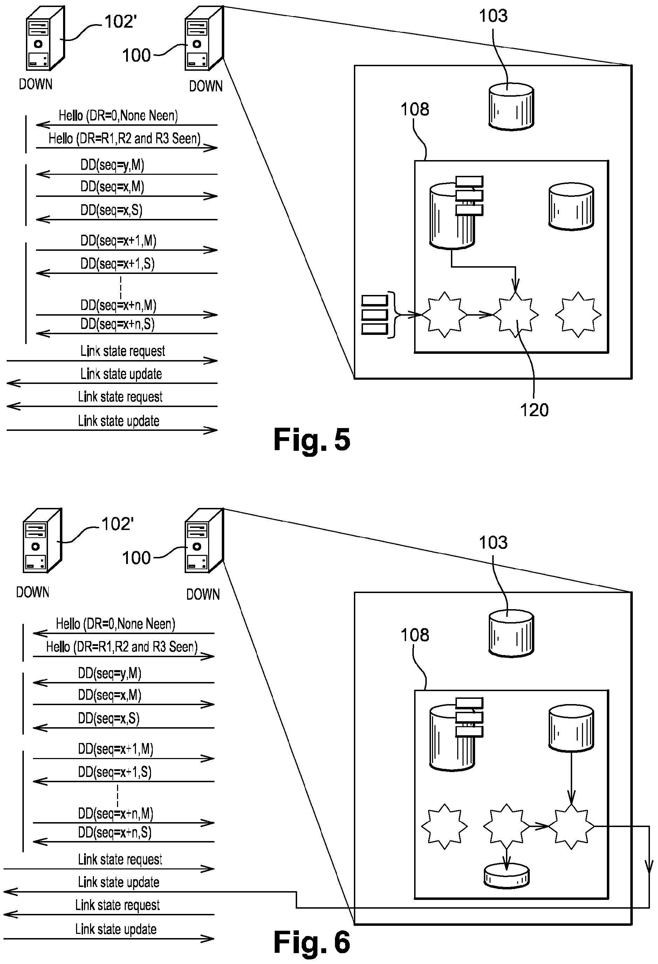

Préalablement à cette signature, la couche de protection effectue une vérification des listes LSA'1, LSA'2, ... LSA'n transmises par la base 103 de données en comparant - étape 120 - les empreintes hash(LSA'1), hash(LSA'2), ... hash(LSA'n) obtenues à partir des ces listes LSA'1, LSA'2, ... LSA'n avec les empreintes hash(LSA1), hash(LSA2), ... hash(LSAn) déjà stockées (figure 5).

Si ces empreintes sont identiques, alors les listes sont considérées comme identiques et le paquet LSU est signé pour son émission (figure 6).

Le cas échéant, le routeur inhibe cette émission en considérant qu'au moins une des listes a été corrompue.

La présente invention est susceptible de nombreuses variantes. Notamment, la couche sécurisée 103 peut être mise en oeuvre avec des moyens distants ou amovibles vis-à-vis du routeur tels qu'une carte à puce et/ou un routeur distinct du routeur sécurisé.

Dans ce cas, ces moyens distants ou amovibles peuvent effectuer au moins une des opérations suivantes : Fournir une fonction de hachage, effectuer le stockage des empreintes, comparer l'empreinte de réception avec l'empreinte d'émission.

## Revendications

1. Procédé de protection d'un réseau de télécommunication comprenant au moins un routeur sécurisé (100) et des routeurs intermédiaires, dans lequel :
le routeur sécurisé est muni d'une carte topologique (103) du réseau pour déterminer des routeurs intermédiaires définissant un parcours optimal dans le routage d'une information,
la carte topologique est générée par partage de listes de liens (LSA1, LSA2, ... LSAn) transmises entre le routeur sécurisé et les routeurs intermédiaires selon un protocole de communication déterminé,
le procédé étant **caractérisé en ce que** le routeur sécurisé (100) effectue, dans une couche sécurisée (108) distincte d'une couche de transmission effectuant la réception et/ou l'émission de paquets (105, 111) conformément au protocole de communication:
- le calcul (109) puis la mémorisation, lors de la réception de listes de liens (LSA1, LSA2, ... LSAn), d'au moins une empreinte de réception (hash(LSA1), hash(LSA2), ... hash(LSAn)) relative aux listes reçues (LSA1, LSA2, ... LSAn),
- le calcul puis la mémorisation, lors de l'émission de listes de liens (LSA'1, LSA'2, ... LSA'n), d'au moins une empreinte d'émission (hash(LSA'1), hash(LSA'2), ... hash(LSA'n)) relative aux listes à émettre, et
et une comparaison (120) de l'empreinte de réception (hash(LSA1), hash(LSA2), ... hash(LSAn)) à l'empreinte d'émission (hash(LSA'1), hash(LSA'2), ... hash(LSA'n)) lors de l'émission de listes de liens (LSA'1, LSA'2, ... LSA'n) de telle sorte que l'émission d'une liste soit inhibée si l'empreinte de réception est distincte de l'empreinte d'émission.

2. Procédé selon la revendication 1 dans lequel le calcul de l'empreinte de réception (hash(LSA1), hash(LSA2), ... hash(LSAn)) est effectué pour chaque liste reçue (LSA1, LSA2, ... LSAn) et le calcul de l'empreinte d'émission (hash(LSA'1), hash(LSA'2), ... hash(LSA'n)) est effectué pour chaque liste (LSA'1, LSA'2, ... LSA'n) à émettre.

3. Procédé selon la revendication 2 **caractérisé en ce que** uniquement l'émission des listes dont l'empreinte de réception est distincte de l'empreinte d'émission est inhibée.

4. Procédé selon la revendication 1, 2 ou 3 **caractérisé en ce que** les empreintes de réception (hash(LSA1), hash(LSA2), ... hash(LSAn)) ou les empreintes d'émission (hash(LSA'1), hash(LSA'2), ... hash(LSA'n)) sont obtenues par une fonction de hachage.

5. Procédé selon l'une des revendications précédentes **caractérisé en ce qu'**il comprend la génération par la couche sécurisée et l'association aux listes émises d'une signature identifiant le routeur sécurisé, après la comparaison des empreintes d'émission et de réception.

6. Procédé selon la revendication 5 **caractérisé en ce qu'**il comprend la vérification, par la couche sécurisée dans les listes reçues, d'une signature de routeur avant le calcul des empreintes d'émission (hash(LSA'1), hash(LSA'2), ... hash(LSA'n)).

7. Procédé selon l'une des revendications 5 ou 6 **caractérisé en ce que** la couche sécurisée (108) est mise en oeuvre avec des moyens amovibles vis-à-vis du routeur.

8. Procédé selon la revendication 7 **caractérisé en ce que** les moyens amovibles sont formés par une carte à puce et/ou un routeur distinct du routeur sécurisé.

9. Procédé selon la revendication 8 **caractérisé en ce que** les moyens amovibles effectuent au moins une des opérations suivantes: fournir une fonction de hachage, effectuer le stockage des empreintes, comparer l'empreinte de réception avec l'empreinte d'émission.

10. Procédé selon l'une des revendications précédentes **caractérisé en ce que**, le réseau de télécommunication étant une aire du réseau Internet, il utilise le protocole OSPF, de l'anglais « Open Shortest Path First », pour établir la carte de cette aire au moyen de listes LSA.

11. Routeur (100) sécurisé d'un réseau de télécommunication comprenant une carte topologique de ce réseau pour déterminer des routeurs intermédiaires définissant un parcours optimal dans le routage d'une information, la carte topologique étant générée par partage de listes de liens (LSA1, LSA2, ... LSAn) transmises entre le routeur sécurisé et les routeurs intermédiaires selon un protocole de communication déterminé,
le routeur sécurisé (100) étant **caractérisé en ce que** qu'il comprend une couche sécurisée (108) distincte d'une couche de transmission effectuant la réception et/ou l'émission de paquets (105, 111) conformément au protocole de communication, avec des moyens pour mettre en oeuvre un procédé conforme à l'une quelconque des revendications 1 à 10 :
- des moyens pour calculer et mémoriser, postérieurement à la réception de listes de liens (LSA1, LSA2, ... LSAn), au moins une empreinte de réception (hash(LSA1), hash(LSA2), ... hash(LSAn)) relatives aux listes de liens reçues (LSA1, LSA2, ... LSAn),
- des moyens pour calculer et mémoriser, antérieurement à l'émission de listes de liens (LSA'1, LSA'2, ... LSA'n), au moins une empreinte d'émission (hash(LSA'1), hash(LSA'2), ... hash(LSA'n)) relatives aux listes de liens (LSA'1, LSA'2, ... LSA'n) à émettre,
- des moyens pour comparer l'empreinte de réception (hash(LSA1), hash(LSA2), ... hash(LSAn)) à l'empreinte d'émission (hash(LSA'1), hash(LSA'2), ... hash(LSA'n)), et
- des moyens pour inhiber l'émission d'une liste de liens (LSA1, LSA2, ... LSAn) si l'empreinte de réception est distincte de l'empreinte d'émission.

12. Carte à puce pour routeur sécurisé (100) d'un réseau de télécommunication, ce routeur (100) étant muni d'une carte topologique de ce réseau pour déterminer des routeurs intermédiaires définissant un parcours optimal dans le routage d'une information, cette carte topologique étant générée par partage des liste de liens (LSA1, LSA2, ... LSAn) transmises entre le routeur sécurisé et les routeurs intermédiaires selon un protocole de communication déterminé, la carte à puce étant configurée pour la mise en oeuvre du procédé suivant l'une des revendications 8 à 10, **caractérisée en ce qu'**elle comprend une couche sécurisée (108) distincte d'une couche de transmission effectuant la réception et/ou l'émission de paquets (105, 111) conformément au protocole de communication, avec au moins un des moyens suivants pour interagir avec le routeur sécurisé (100)
- des moyens pour calculer et/ou mémoriser, postérieurement à la réception de listes de liens, au moins une empreinte de réception (hash(LSA1), hash(LSA2), ... hash(LSAn)) relative aux listes de liens reçues (LSA1, LSA2, ... LSAn),
- des moyens pour calculer et/ou mémoriser, antérieurement à l'émission de listes de liens, au moins une empreinte d'émission (hash(LSA'1), hash(LSA'2), ... hash(LSA'n)) relative aux listes de liens (LSA'1, LSA'2, ... LSA'n) à émettre,
- des moyens pour comparer l'empreinte de réception (hash(LSA1), hash(LSA2), ... hash(LSAn)) à l'empreinte d'émission (hash(LSA'1), hash(LSA'2), ... hash(LSA'n)), et/ou
- des moyens pour inhiber l'émission d'une liste de liens (LSA1, LSA2, ... LSAn) si l'empreinte de réception (hash(LSA1), hash(LSA2), ... hash(LSAn)) est distincte de l'empreinte d'émission (hash(LSA'1), hash(LSA'2), ... hash(LSA'n)).

## Patentansprüche

1. Verfahren zur Sicherung eines Telekommunikationsnetzes, umfassend mindestens einen gesicherten Router (100) und Zwischen-Router, wobei:
der gesicherte Router mit einer topologischen Karte (103) des Netzes ausgestattet ist, um Zwischen-Router zu bestimmen, die eine optimale Route für das Routing einer Information festlegen,
die topologische Karte durch gemeinsame Nutzung von Verbindungslisten (LSA1, LSA2, ... LSAn) erzeugt wird, die zwischen dem gesicherten Router und den Zwischen-Routern gemäß einem bestimmten Kommunikationsprotokoll übertragen werden,
wobei das Verfahren **dadurch gekennzeichnet ist, dass** der gesicherte Router (100) in einer gesicherten Schicht (108), die sich von einer Übertragungsschicht unterscheidet, die den Empfang und/oder das Senden von Paketen (105, 111) gemäß dem Kommunikationsprotokoll durchführt, durchführt:
- das Berechnen (109), danach das Speichern, beim Empfang von Verbindungslisten (LSA1, LSA2, ... LSAn), von mindestens einem Empfangsabdruck (hash(LSA1), hash(LSA2), ... hash(LSAn)), der sich auf die empfangenen Listen (LSA1, LSA2, ... LSAn) bezieht,
- das Berechnen, danach das Speichern, beim Senden von Verbindungslisten (LSA'1, LSA'2, ... LSA'n), von mindestens einem Sendeabdruck (hash(LSA'1), hash(LSA'2), ... hash(LSA'n)), der sich auf die zu sendenden Listen bezieht, und
und einen Vergleich (120) des Empfangsabdrucks (hash(LSA1), hash(LSA2), ... hash(LSAn)) mit dem Sendeabdruck (hash(LSA'1), hash(LSA'2), ... hash(LSA'n)) beim Senden von Verbindungslisten (LSA'1, LSA'2, ... LSA'n), so dass das Senden einer Liste gehemmt wird, wenn sich der Empfangsabdruck vom Sendeabdruck unterscheidet.

2. Verfahren nach Anspruch 1, wobei das Berechnen des Empfangsabdrucks (hash(LSA1), hash(LSA2), ... hash(LSAn)) für jede empfangene Liste (LSA1, LSA2, ... LSAn) durchgeführt wird und das Berechnen des Sendeabdrucks (hash(LSA'1), hash(LSA'2), ... hash(LSA'n)) für jede zu sendende Liste (LSA'1, LSA'2, ... LSA'n) durchgeführt wird.

3. Verfahren nach Anspruch 2, **dadurch gekennzeichnet, dass** nur das Senden der Listen, deren Empfangsabdruck vom Sendeabdruck unterschiedlich ist, gehemmt wird.

4. Verfahren nach Anspruch 1, 2 oder 3, **dadurch gekennzeichnet, dass** die Empfangsabdrücke (hash(LSA1), hash(LSA2), ... hash(LSAn)) oder die Sendeabdrücke (hash(LSA1), hash(LSA'2), ... hash(LSA'n)) mittels einer Hashfunktion erhalten werden.

5. Verfahren nach einem der vorangehenden Ansprüche, **dadurch gekennzeichnet, dass** es nach dem Vergleichen der Sende- und Empfangsabdrücke das Erzeugen einer Signatur durch die gesicherte Schicht und das Zuordnen zu den gesendeten Listen umfasst, die den gesicherten Router identifiziert.

6. Verfahren nach Anspruch 5, **dadurch gekennzeichnet, dass** es vor dem Berechnen der Sendeabdrücke (hash(LSA'1), hash(LSA'2), ... hash(LSA'n)) das Verifizieren einer Routersignatur durch die gesicherte Schicht in den empfangenen Listen umfasst.

7. Verfahren nach einem der Ansprüche 5 oder 6, **dadurch gekennzeichnet, dass** die gesicherte Schicht (108) mit gegenüber dem Router lösbaren Mitteln umgesetzt wird.

8. Verfahren nach Anspruch 7, **dadurch gekennzeichnet, dass** die lösbaren Mittel von einer Chipkarte und/oder einem Router gebildet sind, der sich von dem gesicherten Router unterscheidet.

9. Verfahren nach Anspruch 8, **dadurch gekennzeichnet, dass** die lösbaren Mittel mindestens eine der folgenden Operationen durchführen: Bereitstellen einer Hashfunktion, Durchführen des Speicherns der Abdrücke, Vergleichen des Empfangsabdrucks mit dem Sendeabdruck.

10. Verfahren nach einem der vorangehenden Ansprüche, **dadurch gekennzeichnet, dass**, wobei das Telekommunikationsnetzes ein Bereich des Internetnetzes ist, es das Protokoll OSPF, aus dem Englischen "Open Shortest Path First", benutzt, um die Karte dieses Bereichs mit Hilfe von LSA-Listen zu erstellen.

11. Gesicherter Router (100) eines Telekommunikationsnetzes, umfassend eine topologische Karte dieses Netzes, um Zwischen-Router zu bestimmen, die eine optimale Route für das Routing einer Information festlegen, wobei die topologische Karte durch gemeinsame Nutzung von Verbindungslisten (LSA1, LSA2, ... LSAn) erzeugt wird, die zwischen dem gesicherten Router und den Zwischen-Routern gemäß einem bestimmten Kommunikationsprotokoll übertragen werden,
wobei der gesicherte Router (100) **dadurch gekennzeichnet ist, dass** er eine gesicherte Schicht (108) umfasst, die sich von einer Übertragungsschicht unterscheidet, die den Empfang und/oder das Senden von Paketen (105, 111) gemäß dem Kommunikationsprotokoll mit Mitteln für die Umsetzung eines Verfahrens nach einem der Ansprüche 1 bis 10 durchführt:
- Mitteln zum Berechnen und Speichern, nach dem Empfang von Verbindungslisten (LSA1, LSA2, ... LSAn), mindestens eines Empfangsabdrucks (hash(LSA1), hash(LSA2), ... hash(LSAn)), der sich auf die empfangenen Verbindungslisten (LSA1, LSA2, ... LSAn) bezieht,
- Mitteln zum Berechnen und Speichern, vor dem Senden von Verbindungslisten (LSA'1, LSA'2, ... LSA'n), mindestens eines Sendeabdrucks (hash(LSA'1), hash(LSA'2), ... hash(LSA'n)), der sich auf die zu sendenden Verbindungslisten (LSA'1, LSA'2, ... LSA'n) bezieht,
- Mitteln zum Vergleichen des Empfangsabdrucks (hash(LSA1), hash(LSA2), ... hash(LSAn)) mit dem Sendeabdruck (hash(LSA'1), hash(LSA'2), ... hash(LSA'n)), und
- Mitteln zum Hemmen des Sendens einer Verbindungsliste (LSA1, LSA2, ... LSAn), wenn sich der Empfangsabdruck vom Sendeabdruck unterscheidet.

12. Chipkarte für gesicherten Router (100) eines Telekommunikationsnetzes, wobei dieser Router (100) mit einer topologischen Karte dieses Netzes ausgestattet ist, um Zwischen-Router festzulegen, die eine optimale Route für das Routing einer Information festlegen, wobei diese topologische Karte durch gemeinsame Nutzung von Verbindungslisten (LSA1, LSA2, ... LSAn) erzeugt wird, die zwischen dem gesicherten Router und den Zwischen-Routern gemäß einem bestimmten Kommunikationsprotokoll übertragen werden,
wobei die Chipkarte für die Umsetzung des Verfahrens nach einem der Ansprüche 8 bis 10 konfiguriert ist,
**dadurch gekennzeichnet, dass** sie eine gesicherte Schicht (108) umfasst, die sich von einer Übertragungsschicht unterscheidet, die den Empfang und/oder das Senden von Paketen (105, 111) gemäß dem Kommunikationsprotokoll mit mindestens einem der folgenden Mittel durchführt, um mit dem gesicherten Router (100) zu interagieren:
- Mitteln zum Berechnen und/oder Speichern, nach dem Empfang von Verbindungslisten, mindestens eines Empfangsabdrucks (hash(LSA1), hash(LSA2), ... hash(LSAn)), der sich auf die empfangenen Verbindungslisten (LSA1, LSA2, ... LSAn) bezieht,
- Mitteln zum Berechnen und/oder Speichern, vor dem Senden von Verbindungslisten, mindestens eines Sendeabdrucks (hash(LSA'1), hash(LSA'2), ... hash(LSA'n)), der sich auf die zu sendenden Verbindungslisten (LSA'1, LSA'2, ... LSA'n) bezieht,
- Mitteln zum Vergleichen des Empfangsabdrucks (hash(LSA1), hash(LSA2), ... hash(LSAn)) mit dem Sendeabdruck (hash(LSA'1), hash(LSA'2), ... hash(LSA'n)), und/oder
- Mitteln zum Hemmen des Sendens einer Verbindungsliste (LSA1, LSA2, ... LSAn), wenn sich der Empfangsabdruck (hash(LSA1), hash(LSA2), ... hash(LSAn)) vom Sendeabdruck (hash(LSA'1), hash(LSA'2), ... hash(LSA'n)) unterscheidet.

## Claims

1. A method of protecting a telecommunication network comprising at least one secure router (100) and intermediary routers, wherein the secure router is equipped with a topological map (103) of the network to determine intermediary routers that define an optimal path in the routing of an item of information,
the topological map is generated by sharing lists of links (LSA1, LSA2, ... LSAn) transmitted between the secure router and the intermediary routers according to a determined communication protocol,
the method being **characterized in that** the secure router (100) performs, in a secure layer (108) separate from a transmission layer receiving and/or sending packets (105, 111) in accordance with the communication protocol:
- the calculation (109) then memorization, when receiving lists of links (LSA1, LSA2, ... LSAn) of at least one receipt fingerprint (hash(LSA1), hash(LSA2), ... hash(LSAn)) related to the received lists (LSA1, LSA2, ... LSAn),
- the calculation, then memorization, when sending lists of links (LSA'1, LSA'2, ... LSA'n) of at least one send fingerprint (hash(LSA'1), hash(LSA'2), ... hash(LSA'n)) related to the lists to be sent, and
a comparison (120) of the receipt fingerprint (hash(LSA1), hash(LSA2), ... hash(LSAn)) to the send fingerprint (hash(LSA'1), hash(LSA'2), ... hash(LSA'n)) when sending a list of links (LSA'1, LSA'2, ... LSA'n) such that the sending of a list is prevented if the receipt fingerprint is different from the send fingerprint.

2. A method according to claim 1, wherein the calculation of the receipt fingerprint (hash(LSA1), hash(LSA2), ... hash(LSAn)) is performed for each list received (LSA1, LSA2, ... LSAn) and the calculation of the send fingerprint (hash(LSA'1), hash(LSA'2), ... hash(LSA'n)) is performed for each list (LSA'1, LSA'2, ... LSA'n) to be sent.

3. A method according to claim 2, **characterized in that** only the sending of lists whose receipt fingerprint is different from the send fingerprint is prevented.

4. A method according to claim 1, 2, or 3 **characterized in that** the receipt fingerprints (hash(LSA1), hash(LSA2), ... hash(LSAn)) or the send fingerprints (hash(LSA'1), hash(LSA'2), ... hash(LSA'n)) are obtained by a hash function.

5. A method according to any one the preceding claims, **characterized in that** it comprises the secure layer generating a signature identifying the secure router and the association of that signature with the sent lists, after the send and receipt fingerprints are compared.

6. A method according to claim 5, **characterized in that** it comprises the verification, by the secure layer in the received lists, of a router signature before the send fingerprints (hash(LSA'1), hash(LSA'2), ... hash(LSA'n)) are calculated.

7. A method according to one of the claims 5 or 6, **characterized in that** the secure layer (108) is implemented with means removable with respect to the router.

8. A method according to claim 7, **characterized in that** the removable means are formed by a chip card and/or a router separate from the secure router.

9. A method according to claim 8, **characterized in that** the removable means perform at least one of the following operations: Providing a hash function, storing fingerprints, comparing the receipt fingerprint to the send fingerprint.

10. A method according to one of the preceding claims, **characterized in that**, the telecommunication network being an area of the Internet, it uses the protocol OSPF, for "Open Shortest Path First," to establish the map of that area using LSA lists.

11. A secure router (100) of a telecommunication network comprising a topological map (103) of that network to determine intermediary routers that define an optimal path in the routing of an item of information, the topological map is generated by sharing lists of links (LSA1, LSA2, ... LSAn) transmitted between the secure router and the intermediary routers according to a determined communication protocol,
the secure router (100) being **characterized in that** it comprises a secure layer (108) separate from a transmission layer receiving and/or sending packets (105, 111) in accordance with the communication protocol, with means for implementing a method according to any of the claims 1 to 10:
- means for calculating and memorizing, after receiving lists of links (LSA1, LSA2, ... LSAn), at least one receipt fingerprint (hash(LSA1), hash(LSA2), ... hash(LSAn)) related to the received lists of links (LSA1, LSA2, ... LSAn),
- means for calculating and memorizing, before sending lists of links (LSA'1, LSA'2, ... LSA'n), at least one send fingerprint (hash(LSA'1), hash(LSA'2), ... hash(LSA'n)) related to the lists of links (LSA'1, LSA'2, ... LSA'n) to be sent,
- means for comparing the receipt fingerprint (hash(LSA1), hash(LSA2), ... hash(LSAn)) to the send fingerprint (hash(LSA'1), hash(LSA'2), ... hash(LSA'n)), and
- means for preventing the sending of a list of links (LSA1, LSA2, ... LSAn) if the receipt fingerprint is different from the send fingerprint.

12. A chip card for a secure router (100) of a telecommunication network, that router (100) being equipped with a topological map of that network to determine intermediary routers that define an optimal path in the routing of an item of information, that topological map being generated by sharing lists of links (LSA1, LSA2, ... LSAn) transmitted between the secure router and the intermediary routers according to a determined communication protocol,
the chip card being configured for the implementation of the method according to any of the claims 8 to 10,
**characterized in that** it comprises a secure layer (108) separate from a transmission layer receiving and/or sending packets (105, 111) in accordance with the communication protocol, with at least one of the following means for interacting with the secure router (100):
- means for calculating and/or memorizing, after receiving lists of links, at least one receipt fingerprint (hash(LSA1), hash(LSA2), ... hash(LSAn)) related to the received lists of links (LSA1, LSA2, ... LSAn),
- means for calculating and/or memorizing, before sending lists of links (LSA'1, LSA'2, LSA'n), at least one send fingerprint (hash(LSA'1), hash(LSA'2), ... hash(LSA'n)) related to the lists of links (LSA'1, LSA'2, ... LSA'n) to be sent,
- means for comparing the receipt fingerprint (hash(LSA1), hash(LSA2), ... hash(LSAn)) to the send fingerprint (hash(LSA'1), hash(LSA'2), ... hash(LSA'n)), and/or
- means for preventing the sending of a list of links (LSA1, LSA2, ... LSAn) if the receipt fingerprint (hash(LSA1), hash(LSA2), ... hash(LSAn)) is different from the send fingerprint (hash(LSA'1), hash(LSA'2), ... hash(LSA'n)).
